# EUROPÄISCHE PATENTSCHRIFT

(11) **EP 1 732 722 B1**
(45) Veröffentlichungstag und Bekanntmachung des Hinweises auf die Patenterteilung: **18.05.2011**
(21) Anmeldenummer: 05730900.7
(22) Anmeldetag: 05.04.2005
(51) Int. Cl.: B23B 31/16

(54) **SPANNFUTTER ZUR WERKSTÜCKAUFNAHME**
CLAMPING CHUCK FOR RECEIVING A WORKPIECE
MANDRIN DE SERRAGE POUR LA RECEPTION D'UNE PIECE A USINER

(30) Priorität: 06.04.2004 DE 102004018348
(43) Veröffentlichungstag der Anmeldung: 20.12.2006
(73) Patentinhaber: Hainbuch GmbH Spannende Technik, 71672 Marbach (DE)
(72) Erfinder: WELLER, Hans-Michael, 71563 Affalterbach (DE); MANDARELLO, Attilio, 71563 Affalterbach (DE)
(74) Vertreter: Patentanwälte Ruff, Wilhelm, Beier, Dauster & Partner
(86) Internationale Anmeldenummer: PCT/EP2005/003552
(87) Internationale Veröffentlichungsnummer: WO 2005/097381

(56) Entgegenhaltungen:
- DE-U1- 29 918 229
- US-A- 2 759 735
- US-A- 2 948 542
- US-A- 4 700 957

## Beschreibung

Die Erfindung betrifft ein Spannfutter gemäß dem Oberbegriff des Anspruchs 1. Ein Spannfutter mit solchen Merkmalen wird beispielweise aus US 2, 759, 735 oder US 2, 948, 542 bekannt.

Spannfutter sind aus dem Stand der Technik in vielfältigen Ausführungsformen bekannt. Sie werden beispielsweise dazu eingesetzt, Werkstücke für Bearbeitungsvorgänge in Bearbeitungsmaschinen zu spannen bzw. zu fixieren. Das Spannfutter kann dazu fest und/oder bewegbar angebracht sein und ist zur Aufnahme von Bearbeitungskräften, die von einem Bearbeitungswerkzeug auf das Werkstück eingeleitet werden, vorgesehen. Bekannte Spannfutter weisen dazu ein Grundgehäuse auf, das zur Befestigung an der Bearbeitungsmaschine, insbesondere an einem Spindelstock einer Drehmaschine oder einem Maschinentisch einer Fräsmaschine ausgebildet sein kann. An dem Grundgehäuse sind zumindest zwei Spannbacken vorgesehen, die Druckflächen zur Aufbringung von Haltekräften auf das Werkstück aufweisen, wobei das Werkstück zwischen den Spannbacken aufgenommen werden kann. Dabei ist zumindest ein Spannbacken schiebebeweglich an dem Gehäuse angebracht und ermöglicht somit ein kraft- und/oder formschlüssiges Aufnehmen des Werkstücks zwischen den Spannbacken. Eine Bewegungsrichtung des bzw. der schiebebeweglichen Spannbacken ist insbesondere auf eine Mittellängsachse des Spannfutters ausgerichtet. Bei zwei schiebebeweglichen Spannbacken kann beispielsweise eine gegenläufige Anordnung der Spannbacken vorgesehen sein, d.h. beide Spannbacken sind mit jeweils entgegengesetzter Richtung auf einer gemeinsamen Bewegungsachse bewegbar. Zur Einstellung des zumindest einen schiebebeweglichen Spannbackens ist zumindest ein Umlenkhebel vorgesehen, der eine kinematische Wirkverbindung zwischen dem zumindest einen schiebebeweglichen Spannbacken und einer Zugeinrichtung herstellt, wobei die Zugeinrichtung manuell oder automatisiert mit Betätigungskräften beaufschlagbar ist, die über den Umlenkhebel zu einer Kraftbeaufschlagung der Spannbacken führen. Der Umlenkhebel ist dazu drehbeweglich an dem Grundgehäuse angebracht und kann somit die Zug- und/oder Druckkräfte, die von der Zugeinrichtung erbracht werden, auf den zumindest einen Spannbacken übertragen. Die Zugeinrichtung kann insbesondere für eine kraftübertragende Verbindung mit einem Zugrohr einer Drehmaschine verbindbar ausgebildet sein, so dass eine automatisierte Betätigung der Spanneinrichtung über die Bearbeitungsmaschine ermöglicht wird.

Eine bekannte Ausführungsform eines Spannfutters ist in der US 3,251,606 beschrieben. Dort wird ein Spannfutter gezeigt, bei dem in einem im wesentlichen zylindrischen Grundgehäuse drei jeweils in radialer Richtung an dem Grundgehäuse angeordnete und verschiebliche Spannbacken vorgesehen sind. Die Spannbacken stehen über L-förmige, mit Kugelköpfen versehene, drehbar gelagerte Umlenkhebel in kinematischer Wirkverbindung mit einer Zugstange und sind durch eine lineare Bewegung der Zugstange in Richtung einer Mittellängsachse des zylindrischen Grundgehäuses in orthogonaler Richtung zu dieser Mittellängsachse bewegbar. Durch die im wesentlichen gleichartige Ausgestaltung aller Spannbacken und aller Umlenkhebel wird eine synchrone und hinsichtlich der Mittellängsachse des Grundgehäuses gleichartige Bewegung der Spannbacken bewirkt, so dass Werkstücke, die durch die Spannbacken gespannt werden sollen, im wesentlichen zentrisch zur Mittellängsachse einspannbar sind.

Die DE 299 18 229 U1 beschreibt einen Probenhalter zum Spannen von Werkstücken mit einem Grundkörper, in dem zwei Spannbacken sowie ein Stempel zum Verstellen zumindest einer der beiden Spannbacken angeordnet sind. Eine Spannkraft kann von einem ersten Vorschubteil über Wippen auf die Spannbacken übertragen werden, wobei die Wippen parallel zur Verstellrichtung der Spannbacken verschiebbar sind.

Die Schwenkachse ist dabei beweglich in dem Grundgehäuse gelagert.

Die US 2,948,542 beschreibt eine Möglichkeit, wie bei einem entsprechenden Spannfutter die Schwenkachse gemäß der dortigen Fig. 6 um eine andere Achse auf einer Kreisbahn schwenkt. Dies erfolgt bei jeder Bewegung des Umlenkhebels.

Die US 2,759,735 beschreibt ein ähnliches Verschwenken des Umlenkhebels um eine Achse eines Anlenkhebels, was wiederum bei jeder Bewegung des Umlenkhebels auftritt.

Die der Erfindung zugrundeliegende Aufgabe besteht darin, ein Spannfutter der eingangs genannten Art zu schaffen, bei dem eine Justiermöglichkeit zum Ausgleich von Toleranzen des Grundgehäuses, der Spannbacken und der Umlenkhebel gegeben ist.

Gelöst wird diese Aufgabe durch ein Spannfutter mit den Merkmalen des Anspruchs 1. Vorteilhafte sowie bevorzugte Ausgestaltungen der Erfindung sind in den weiteren Ansprüchen enthalten und werden im folgenden näher erläutert. Der Wortlaut der Ansprüche wird durch ausdrückliche Bezugnahme zum Inhalt der Beschreibung gemacht.

Erfindungsgemäß ist bei einem Spannfutter vorgesehen, dass eine Schwenkachse des Umlenkhebels für eine Justierung des zumindest eines schiebebeweglichen Spannbackens verlagerbar gegenüber dem Grundgehäuse ausgebildet ist. Dadurch kann eine Justierung des zumindest einen, schiebebeweglich angebrachten Spannbackens bewirkt werden. Der Umlenkhebel wird durch die Verlagerung der Schwenkachse gegenüber dem wirkverbundenen Spannbacken verschoben, wodurch eine zumindest anteilige, lineare Verlagerung des schiebebeweglichen Spannbackens hervorgerufen wird. Damit kann der zumindest eine, schiebebeweglich angebrachte Spannbacken längs der Bewegungsrichtung derart verschoben werden, dass ein Ausgleich von Toleranzen des Spannbackens und/oder des Umlenkhebels gegenüber dem zumindest einen weiteren Spannbacken vorgenommen werden kann. Eine derartige Justage ist insbesondere dann von Interesse, wenn das im Spannfutter eingespannte Werkstück einer hochgenauen Bearbeitung zugeführt werden soll, bei der eine Kompensation von Spannfehlern, die durch die Spanneinrichtung hervorgerufen werden, erforderlich ist, um Mindestanforderungen an eine Bearbeitungsqualität des zu bearbeitenden Werkstücks zu erfüllen.

In weiterer Ausgestaltung der Erfindung ist die Schwenkachse auf einer gekrümmten Bahn gegenüber dem Gehäuse verlagerbar ausgeführt. Damit kann eine vorteilhafte Charakteristik der Justage des Umlenkhebels gegenüber dem Spannbacken erzielt werden. Die Krümmung der Bahn, auf der die Schwenkachse verlagerbar vorgesehen ist, ermöglicht einen stufenlosen Übergang zwischen einem gröberen und einem feineren Verstellbereich, so dass die Justage in einfacher Weise durchgeführt werden kann. Hierbei ist insbesondere zu berücksichtigen, dass die Wirkverbindung zwischen Spannbacken und Umlenkhebel in der Regel ohnehin nicht vollständig linear ist. Dieser nichtlinearen Kinematik kann durch die Verlagerung der Schwenkachse auf der gekrümmten Bahn Rechung getragen werden. In einer besonders vorteilhaften Ausführung der Erfindung ist die gekrümmte Bahn als Kreisbahn ausgeführt, so dass eine kontinuierliche Verstellung der Schwenkachse ermöglicht wird.

Bei der Erfindung ist eine Lagerung des Umlenkhebels als Exzenterlagerung ausgebildet. Für eine drehbewegliche Lagerung des Umlenkhebels ist an dem Grundgehäuse zumindest eine Drehlagerstelle vorgesehen, die erfindungsgemäß als Exzenterlagerung ausgebildet ist. Bei einer Exzenterlagerung wird eine Relativbewegung des Umlenkhebels, die zumindest anteilig auch zu einer Justagebewegung des Umlenkhebels längs der Bewegungsrichtung des Spannbackens führt, durch eine Rotation eines als Exzenter ausgeführten Lagerzapfens hervorgerufen, der drehbeweglich in dem Grundgehäuse angebracht ist und dem Umlenkhebel als Drehlagerstelle dient. Durch Rotation des exzentrischen Lagerzapfens kann somit die gewünschte Justage des Umlenkhebels und damit des Spannbackens längs der Bewegungsrichtung des Spannbackens verwirklicht werden. Durch die Ausführung des Lagerzapfens als Exzenterlager kann in einfacher Weise eine besonders vorteilhafte Justagemöglichkeit für den Spannbacken erzielt werden, da in Abhängigkeit von der Exzentrizität und der Position des Lagerzapfens gegenüber dem Gehäuse und dem Umlenkhebel ein weiter Verstellbereich und/oder eine besonders feinfühlige Verstellbarkeit für den Umlenkhebel gewährleistet ist.

Bei der Erfindung ist für die Exzenterlagerung eine Exzenterwelle mit zumindest zwei, im wesentlichen zylindrischen Wellenabschnitten unterschiedlichen Durchmessers vorgesehen, wobei die Wellenabschnitte parallele, nichtkoaxiale Mittelachsen aufweisen. Dadurch lässt sich in vorteilhafter Weise eine exzentrische Lagerung des Umlenkhebels gegenüber dem Grundgehäuse verwirklichen, die auch zuverlässig den bei Benutzung des Spannfutters auftretenden Kräften standhält und keine besonderen, zusätzlichen Abstützungsmaßnahmen benötigt. Die Exzenterwelle kann dabei insbesondere beidseitig des Umlenkhebels in zylindrischen Bohrungen des Grundgehäuses aufgenommen sein und hier entsprechende Zylinderabschnitte aufweisen, so dass eine vorteilhafte, symmetrische Abstützung der Exzenterwelle im Grundgehäuse gewährleistet ist. Die Exzentrizität der Exzenterwelle kann insbesondere dadurch erzielt werden, dass eine Mittelachse des einen oder zweier zylindrischer Wellenabschnitt, die zur Lagerung des Umlenkhebels vorgesehen sind, parallel aber nicht koaxial zu einer Mittelachse der restlichen Exzenterwelle angeordnet ist. In einer besonders vorteilhaften Ausführungsform weist der Wellenabschnitt zur Lagerung des Umlenkhebels einen geringeren Durchmesser gegenüber der restlichen Exzenterwelle oder zumindest eines Abschnitts auf einer Seite auf und ist in einem zylindrischen Hüllmantel der restlichen Exzenterwelle enthalten, so dass eine einfache Herstellbarkeit gewährleistet ist. Ein Verstellbereich und eine Übersetzung zwischen einer in die Exzenterwelle eingeleiteten Rotation und einer Justagebewegung des Umlenkwelle längs der Bewegungsrichtung des wirkverbundenen Spannbackens wird durch die Exzentrizität der Mittelachsen bestimmt. Je stärker diese Exzentrizität ausgeprägt ist, desto größer ist Verstellbereich und desto größer ist auch die Übersetzung des Exzenters.

In weiterer Ausgestaltung der Erfindung sind Blockiermittel für eine Arretierung der Exzenterwelle vorgesehen. Durch Blockiermittel kann eine unerwünschte Bewegung der Exzenterwelle, die zu einer Dejustierung des Umlenkhebels bzw. des wirkverbundenen Spannbackens führen würde, durch Aufbringung von Blockierkräften in radialer und/oder axialer Richtung vermieden werden. Als Blockiermittel werden vorzugsweise Klemmbüchsen eingesetzt, die eine Klemmkraft in radialer Richtung auf die Exzenterwelle ausüben und insbesondere durch Gewindeschrauben mit Spannkräften beaufschlagbar sind. Damit kann ein Benutzer des Spannfutters nach Justage der Exzenterwelle eine Arretierung mittels der Klemmbüchsen durchführen, ohne Gefahr zu laufen, das erzielte Justageergebnis beim Klemmen wieder zu verändern. Die Klemmbüchse wirkt dabei insbesondere kraftschlüssig auf die Exzenterwelle, wodurch eine vorteilhafte, winkelunabhängige Arretierung der Exzenterwelle möglich ist. Alternativ ist ein Klemmung in axialer Richtung möglich.

In weiterer Ausgestaltung der Erfindung ist die Exzenterwelle selbsthemmend gegenüber dem Umlenkhebel oder dem Grundgehäuse ausgeführt. Durch eine selbsthemmende Ausführung der Exzenterwelle kann auf Blockiermittel verzichtet werden, da lediglich die von einem Benutzer auf die Exzenterwelle eingeleiteten Drehmomente zur Justage des Umlenkhebels zu einer Bewegung der Exzenterwelle führen, während andere Kräfte, insbesondere die über den Spannbacken und den Umlenkhebel auf die Exzenterwelle aufgebrachten Kräfte nicht zu einer Bewegung führen. Selbsthemmung tritt insbesondere dann auf, wenn Reibkräfte an der Exzenterwelle höher als über Spannbacken und Umlenkhebel eingeleitete Bearbeitungskräfte sind, so dass die Bearbeitungskräfte nicht zu einer Bewegung der Exzenterwelle führen können. Bei einer selbsthemmenden Gestaltung der Exzenterlagerung und der Exzenterwelle kann eine Dejustierung des Umlenkhebels und des Spannbackens mit oder ohne Einwirkung von Blockiermitteln verhindert werden.

In weiterer Ausgestaltung der Erfindung weist das Spannfutter zwei schiebebeweglich angebrachte Spannbacken auf, wobei jeder der Spannbacken mit einer Exzenterwelle versehen ist, die jeweils einen unterschiedlichen Abstand der parallelen, nicht koaxialen Mittelachsen aufweist. Dadurch kann mit der ersten Spannbacke, die eine Exzenterwelle mit größerem Achsabstand der Mittelachsen versehen ist, zunächst eine Grobeinstellung vorgenommen werden, während anschließend mit der zweiten Spannbacke, die eine Exzenterwelle mit geringerem Mittelachsenabstand aufweist, eine Feineinstellung vorgenommen werden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: in perspektivischer Darstellung ein Spannfutter mit Spannba- cken und einem von den Spannbacken aufgenommenen Werk- stück,
- Fig. 2: in ebener Schnittdarstellung das Spannfutter gemäß Fig. 1,
- Fig.3: in perspektivischer Darstellung eine Exzenterwelle,
- Fig.4: in Seitenansicht eine Darstellung einer alternativen Exzenter- welle und
- Fig. 5: eine Explosionsdarstellung des Spannfutters gemäß Fig. 1.

### Detaillierte Beschreibung der Ausführungsbeispiele

Ein Spannfutter 1 weist ein Grundgehäuse 2 auf, an dem zwei Spannbacken 3 schiebebeweglich angebracht sind. Die Spannbacken 3 sind jeweils auf Führungsschlitten 12 angebracht, die über eine Schwalbenschwanzführung 13 formschlüssig mit einer korrespondierend geformten Führungsschiene 14 des Grundgehäuses 2 verbunden sind. Durch die Schwalbenschwanzführung 13 kann eine Beweglichkeit der Führungsschlitten 12 und damit der Spannbacken 3 in der Bewegungsrichtung 6 gewährleistet werden, während andere Freiheitsgrade der Bewegung zumindest im wesentlichen ausgeschlossen sind. An den Führungsschlitten 12 sind gegenüberliegend angeordnete Halteprismen 15 befestigt, die für eine Aufnahme eines Werkstücks 11 vorgesehen sind. Die Aufnahme des Werkstücks kann dabei insbesondere parallel oder orthogonal zu einer Mittellängsachse 16 des Grundgehäuses 2 vorgesehen sind. Dazu weisen die Halteprismen 15 jeweils prismatische Aussparungen 17 zur formschlüssigen Aufnahme des Werkstücks auf. Die Halteprismen 15 sind über Schraubverbindungen mit den Führungsschlitten 12 lösbar verbunden und können ausgewechselt werden. Zur Sicherstellung einer korrekten Ausrichtung der Halteprismen 15 sind in die Führungsschlitten 12 Führungsnuten 18 eingebracht, in denen die Halteprismen 15 formschlüssig aufgenommen sind. Durch die Führungsnuten 18 werden auch erhebliche Teile der bei einer Bearbeitung des Werkstücks 11 auftretenden Bearbeitungskräfte formschlüssig auf die Führungsschlitten 12 und von dort über die Schwalbenschwanzführung 13 ebenfalls formschlüssig auf die Führungsschiene 14 des Grundgehäuses 2 übertragen.

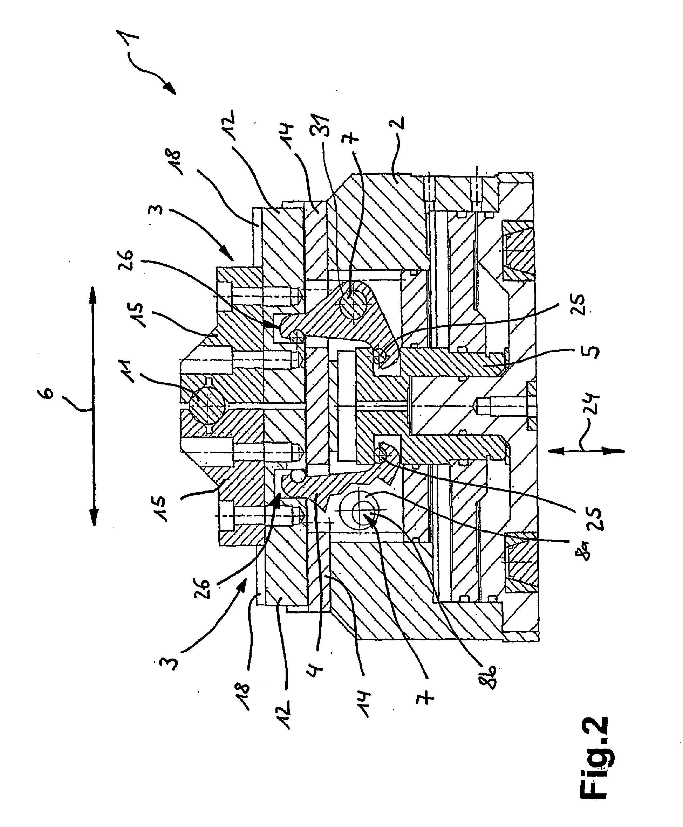

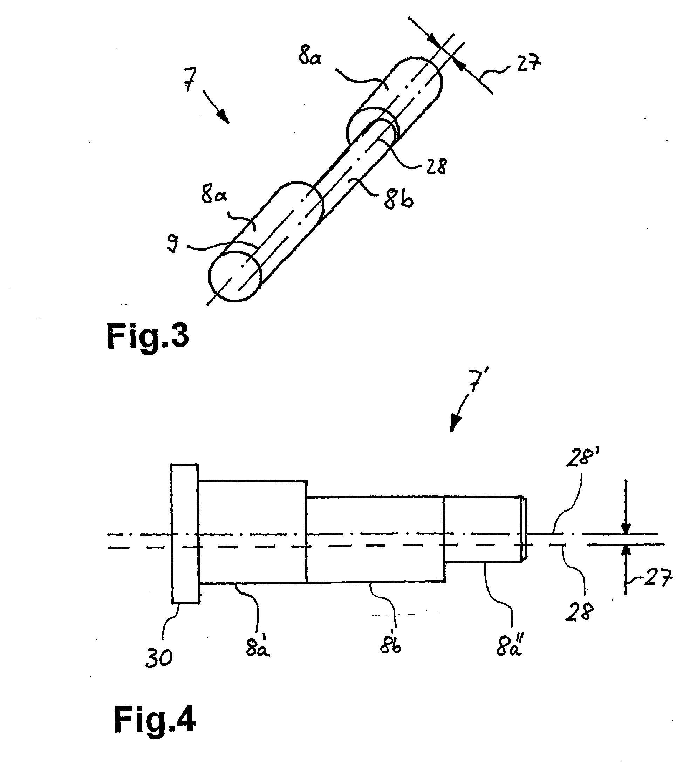

Das im wesentlichen zylindrisch gestaltete Grundgehäuse 2 weist an einer den Spannbacken 3 zugewandten Stirnseite zwei symmetrisch zur Mittellängsachse 16 angeordnete, treppenartige Absätze 19 auf, wobei an parallel zur Mittellängsachse 16 ausgerichteten Seitenflächen 20 der Absätze 19 je zwei taschenartige Vertiefungen vorgesehen sind, in denen mit Schrauben gesicherte Fixierbleche 21 eingebracht sind. Die Fixierbleche 21 dienen als Lagerschilde für die in Fig. 3 näher dargestellten Exzenterwellen und ermöglichen eine Betätigung der Exzenterwellen durch entsprechende Durchbrüche 22. Die Exzenterwellen sind, wie in Fig. 2 näher dargestellt, für eine Justierung einer Position von Umlenkhebeln vorgesehen.

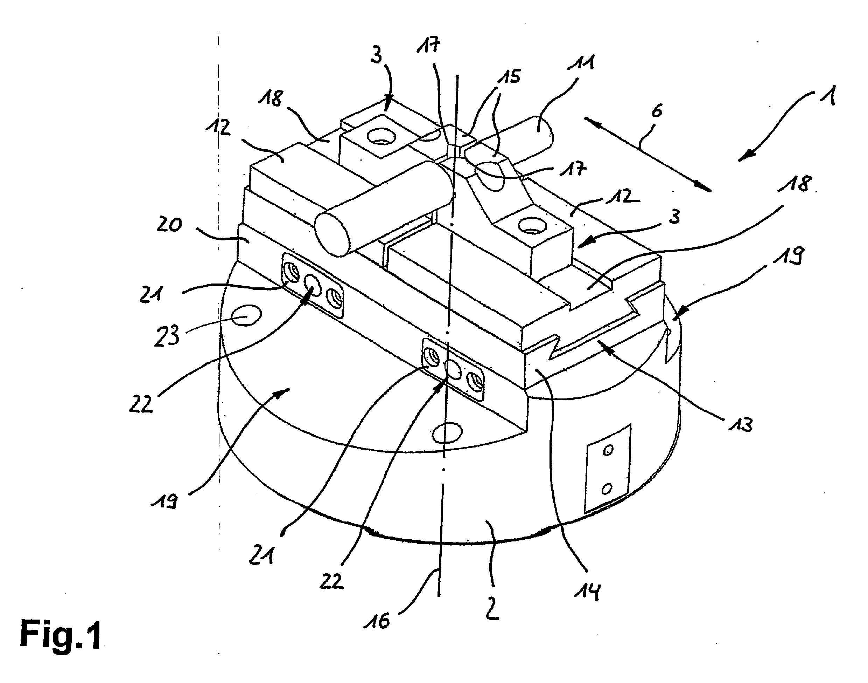

An den in Fig. 1 dargestellten Absätzen 19 sind Befestigungsbohrungen 23 parallel zur Mittellängsachse 16 des Grundgehäuses 2 vorgesehen, die zur Aufnahme von Spannschrauben ausgebildet sind, um das Grundgehäuse 2 an einem nicht dargestellten Spindelstock einer Drehmaschine oder einem Maschinentisch einer Fräsmaschine befestigen zu können.

Die in Fig. 2 dargestellte Schnittansicht des Spannfutters 1 zeigt die kinematische Wirkverbindung zwischen den Spannbacken 3 und einer von der nicht dargestellten Bearbeitungsmaschine betätigten Zugeinrichtung 5, wobei eine drehbewegliche Lagerung der für die kinematische Kopplung zwischen der Zugeinrichtung 5 und den Spannbacken 3 vorgesehenen Umlenkhebel 4 auf Exzenterwellen 7 dargestellt ist. Die Umlenkhebel 4 greifen jeweils formschlüssig in eine Nut der Zugeinrichtung 5 ein. Dabei sind für eine hochbelastbare Kraftübertragung zwischen der Zugeinrichtung 5 und den Umlenkhebeln 4 jeweils Lagerstifte 25 vorgesehen, die mit einer abgeflachten Seite auf einem stirnseitigen Bereich der Zugeinrichtung 5 aufliegen, während ein zylindrischer Bereich gegenüber den Umlenkhebeln 4 für eine schwenkbewegliche Kraftübertragung vorgesehen ist. Eine Übertragung der Betätigungskräfte von den Umlenkhebeln 4 auf die Führungsschlitten 12 ist in ähnlicher Form vorgesehen. Dazu weisen die Umlenkhebel 4, die in Quernuten 26 der Führungsschlitten eingreifen, jeweils einen weiteren Lagerstift 25 auf, der für eine Übertragung von Druckkräften auf den Führungsschlitten 12 ausgebildet ist. Die Exzenterwelle 7, die im Bereich des linken Umlenkhebels 4 näher dargestellt ist, weist einen Wellenabschnitt 8a mit größerem Durchmesser und einen Wellenabschnitt 8b mit kleinerem Durchmesser auf. Der Wellenabschnitt 8b steht in Wirkverbindung mit dem Umlenkhebel 4, während der Wellenabschnitt 8a drehbeweglich in einer zylindrischen Bohrung des Grundgehäuses 2 eingebracht ist.

Durch eine Rotation der Exzenterwelle 7, die um die Mittelachse des Wellenabschnittes 8a stattfindet, kommt es zu einer kreisförmigen Bewegung des Wellenabschnittes 8b um die Mittelachse des Wellenabschnittes 8a, wodurch gleichzeitig eine Verlagerung der Schwenkachse des Umlenkhebels 4 stattfindet. Durch diese Verlagerung wird der statisch bestimmt zwischen der Zugeinrichtung 5 und dem Führungsschlitten 12 aufgenommene Umlenkhebel ebenfalls bewegt, so dass eine Bewegung des Führungsschlittens 12 in der Bewegungsrichtung 6 hervorgerufen wird, wodurch eine Justage der Position des Umlenkhebels 4 vorgenommen werden kann.

Bei der in Fig. 3 dargestellten Exzenterwelle sind die zylindrischen Wellenabschnitte 8a und 8b so angeordnet, dass ein an den Wellen abschnitten 8a anliegender zylindrischer Hüllmantel den Wellenabschnitt 8b mit umfasst. Damit kann eine einfache und materialsparende Herstellung der Exzenterwelle vorgesehen werden. Um die gewünschte Exzentrizität zu erzeugen, ist ein Achsenversatz 27 der beiden Mittellängsachsen vorgesehen. Die Mittelachse 9 der äußeren Welleabschnitte 8a ist dabei um den Achsenversatz 27 von Schwenkachse 28 des Umlenkhebels beabstandet. Je größer der Achsenversatz, desto größer auch der Einstellbereich der Schwenkachse des Umlenkhebels durch die Exzenterwelle. In einer nicht dargestellten Ausführungsform ist eine Exzen terwelle vorgesehen, bei der alle Wellenabschnitte einen zumindest ähnlichen Durchmesser aufweisen. Damit kann eine besonders stabile Exzenterwelle realisiert werden.

Bei der alternativen Exzenterwelle 7' gemäß Fig. 4 ist an einen Bund 30 anschließend ein Wellenabschnitt 8a' vorgesehen. An diesen schließt sich der versetzte Wellenabschnitt 8b' an, wobei auch hier der Achsversatz 27 der beiden Mittellängsachsen 28 und 28' vorgesehen ist. An den versetzten Wellenabschnitt 8b' wiederum schließt sich der Wellen abschnitt 8a" an, der wiederum konzentrisch zur Mittelachse 28' und somit zum anderen Wellenabschnitt 8a' ist. Hier ist eine Lagerung der Exzenterwelle 7' leicht an den beiden Wellenabschnitten 8a' und 8a" möglich. Dadurch, dass der rechte Wellenabschnitt 8a" kleiner ist als der versetzte Wellenabschnitt 8b', ist ein Durchschieben der Exzenterwelle 7' durch die entsprechende Bohrung 31 in dem Umlenkhebel 4 möglich.

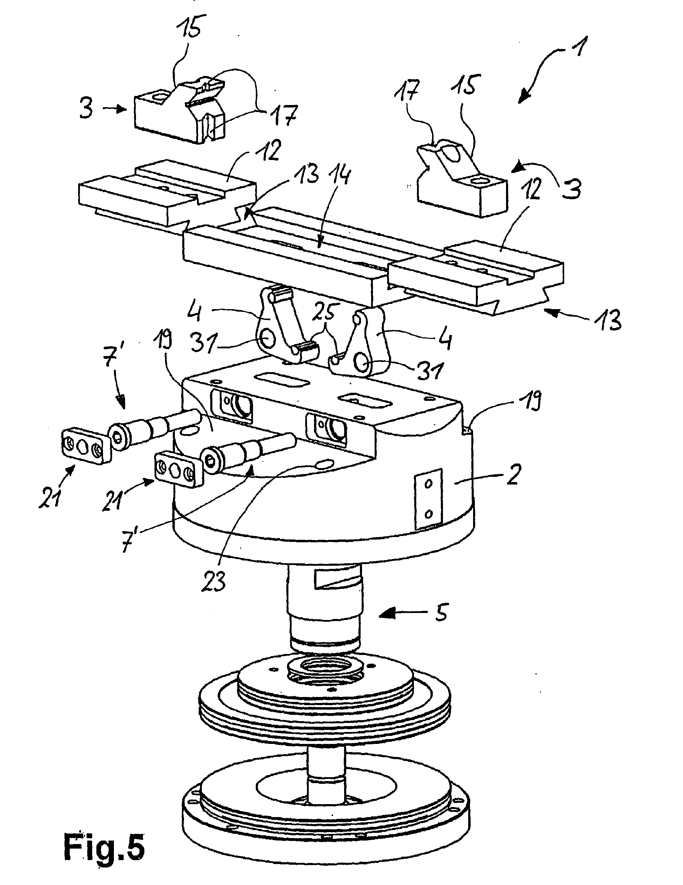

Die Explosionsdarstellung in Fig. 5 zeigt noch einmal in zerlegter Ansicht die Bestandteile des Spannfutters 1 gemäß Fig. 1. Ansonsten wird zur Erläuterung auf die Beschreibung zu den Fig. 1 und 2 verwiesen.

## Patentansprüche

1. Spannfutter (1) zur Aufnahme eines Werkstücks (11) mit
- einem Grundgehäuse (2),
- zumindest zwei Spannbacken (3), von denen zumindest einer schiebebeweglich an dem Grundgehäuse angebracht ist, und
- zumindest einem Umlenkhebel (4), der für eine kinematische Wirkverbindung zwischen dem zumindest einen schiebebeweglichen Spannbacken und einer Zugeinrichtung (5) ausgebildet ist und der schwenkbeweglich gegenüber dem Grundgehäuse gelagert ist,
wobei eine Schwenkachse des Umlenkhebels für eine Justierung des zumindest einen schiebebeweglichen Spannbackens verlagerbar gegenüber dem Grundgehäuse ausgebildet ist, **dadurch gekennzeichnet, dass** die Schwenkachse des Umlenkhebels (4) als exzentrische Lagerung ausgebildet ist, wobei für die Exzenterlagerung eine Exzenterwelle (7, 7') mit zumindest zwei, im wesentlichen zylindrischen Wellenabschnitten (8a, 8b; 8a', 8a", 8b') unterschiedlichen Durchmessers vorgesehen ist, wobei die Wellenabschnitte parallele, nichtkoaxiale Mittelachsen (28, 28') aufweisen.

2. Spannfutter nach Anspruch 1, **dadurch gekennzeichnet, dass** die Schwenkachse auf gekrümmten Bahn, insbesondere auf einer Kreisbahn, gegenüber dem Grundgehäuse (2) verlagerbar ausgeführt ist.

3. Spannfutter nach Anspruch 1, **dadurch gekennzeichnet, dass** Blockiermittel (21) für eine Arretierung der Exzenterwelle (7, 7') vorgesehen sind, insbesondere für Blockierkräfte in radialer und/oder axialer Richtung.

4. Spannfutter nach Anspruch 1 oder 3, **dadurch gekennzeichnet, dass** die Exzenterwelle (7, 7') selbsthemmend gegenüber dem Umlenkhebel (4) und/oder dem Grundgehäuse (2) ausgeführt ist.

5. Spannfutter nach einem der vorhergehenden Ansprüche, **dadurch gekennzeichnet, dass** zwei schiebebeweglich angebrachte Spannbacken (3) vorgesehen sind, wobei jede der Spannbacken mit einer Exzenterwelle (7, 7') versehen ist, die jeweils einen unterschiedlichen Versatz (27) der parallelen, nicht koaxialen Mittelachsen (28, 28') aufweist

## Claims

1. Chuck (1) for holding a workpiece (11), comprising
- a basic housing (2),
- at least two chuck jaws (3), of which at least one is attached to the basic housing in a slidable manner, and
- at least one deflection lever (4) which is designed for a kinematic interaction between the at least one slidable chuck jaw and a draw device (5) and which is mounted in a pivotable manner relative to the basic housing,
wherein a pivot axis of the deflection lever is designed to be displaceable relative to the basic housing for an adjustment of the at least one slidable chuck jaw, **characterized in that** the pivot axis of the deflection lever (4) is designed as an eccentric mounting, wherein an eccentric shaft (7,7') having at least two, substantially cylindrical shaft sections (8a, 8b; 8a', 8a", 8b') of different diameter is provided for the eccentric mounting, wherein the shaft sections have parallel, non-coaxial centre axes (28, 28').

2. Chuck according to Claim 1, **characterized in that** the pivot axis is designed to be displaceable on a curved path, in particular on a circular path, relative to the basic housing (2).

3. Chuck according to Claim 1, **characterized in that** blocking means (21) are provided for locking the eccentric shaft (7, 7'), in particular for blocking forces in a radial and/or axial direction.

4. Chuck according to Claim 1 or 3, **characterized in that** the eccentric shaft (7, 7') is designed to be self-locking relative to the deflection lever (4) and/or the basic housing (2).

5. Chuck according to one of the preceding claims, **characterized in that** two chuck jaws (3) attached in a slidable manner are provided, each of the chuck jaws being provided with an eccentric shaft (7, 7') which in each case has a different offset (27) of the parallel, non-coaxial centre axes (28, 28').

## Revendications

1. Mandrin de serrage (1) pour le logement d'une pièce à usiner (11) avec
- un boîtier de base (2),
- au moins deux mâchoires de serrage (3), desquelles au moins une est appliquée de manière mobile à coulissement au boîtier de base, et
- au moins un levier de renvoi (4), qui est réalisé pour un raccordement opérationnel cinématique entre la ou les mâchoires de serrage mobiles à coulissement et un dispositif de traction (5), et qui est logé de manière mobile à pivotement par rapport au boîtier de base,
sachant qu'un axe de pivotement du levier de renvoi est réalisé de manière déplaçable par rapport au boîtier de base pour un ajustage de la ou les mâchoires de serrage mobiles à coulissement, **caractérisé en ce que** l'axe de pivotement du levier de renvoi (4) est réalisé sous forme de logement excentrique, sachant que pour le logement excentrique on prévoit un arbre à excentrique (7, 7') avec au moins deux sections d'arbre (8a, 8b ; 8a', 8a", 8b') essentiellement cylindriques et présentant des diamètres différents, sachant que les sections d'arbre présentent des lignes médianes (28, 28') parallèles, non-coaxiales.

2. Mandrin de serrage d'après la revendication 1, **caractérisé en ce que** l'axe de pivotement est réalisé de manière à pouvoir être déplacé suivant une trajectoire courbée, notamment suivant une trajectoire circulaire par rapport au boîtier de base (2).

3. Mandrin de serrage d'après la revendication 1, **caractérisé en ce qu'**on prévoit des moyens de blocage (21) pour un arrêtage de l'arbre à excentrique (7, 7'), notamment pour des forces de blocage en direction radiale et/ou axiale.

4. Mandrin de serrage d'après la revendication 1 ou 3, **caractérisé en ce que** l'arbre à excentrique (7, 7') est réalisé de manière auto-indesserrable par rapport au levier de renvoi (4) et/ou au boîtier de base (2).

5. Mandrin de serrage d'après une des revendications précédentes, **caractérisé en ce qu'**on prévoit deux mâchoires de serrage (3) appliquées de façon mobile à coulissement, sachant que chacune des mâchoires de serrage est munie d'un arbre à excentrique (7, 7'), qui présente respectivement un différent décalage (27) des lignes médianes (28, 28') parallèles, non-coaxiales.
